# EUROPEAN PATENT APPLICATION

(11) **EP 1 145 888 A2**
(43) Date of publication of application: **17.10.2001**
(21) Application number: 01108823.4
(22) Date of filing: 09.04.2001
(51) Int. Cl.: B60J 10/00

(54) **Connecting element, in particular a screw, for fastening a gasket profile on a body part of a vehicle**

(30) Priority: 12.04.2000 DE 20006772 U
(71) Applicant: Meritor Automotive GmbH, 60314 Frankfurt (DE)
(72) Inventor: Maass, Klaus-Peter, 38550 Isenbüttel (DE)
(74) Representative: Schumacher, Horst, Dr. Dipl.-Phys.

(57) **Abstract**

A connecting element, in particular a screw, for securing body parts of a vehicle comprises a head with engagement surfaces for an assembly tool, and a shaft. In order to facilitate fastening and removing body parts in combination with a gasket profile, there is located on said head (10) an engagement surface (15) for an assembly tool and at least one holding element, such as a recess (14) to which a component, optimally a gasket profile (4), particularly of a door (2) of a motor vehicle, is clasp-attached in a detachable manner.

## Description

The invention concerns a connecting element, in particular a screw, for fastening body parts, with a head with engagement surfaces for an assembly tool, and with a shaft.

Releasable connecting elements for body parts of vehicles are widely known in the art. The document DE 43 42 461 A1 shows an O-ring seal for a screw head with a sealing function for the screw itself.

The document DE 38 14 522 A1 shows an elongated sealing profile for a vehicle door, however using of C-shaped fixing profiles connected with the body part.

The documents DE-GM 71 13 593 and DE-GM 1 853 922 show a sealing strip for edge protection.

The document GB 2 189 858 shows a double action bolt for receiving a conventional fixing or releasing tool provided with a screw nut. The screw head is provided with a resilient member placed in a surrounding groove so that the screw is retained in engagement with the tool even when hanging downwards.

The document EP 0 842 823 shows an elongated seal profile to be fixed by clipsing on the head of fixed pins.

A typical door-mounted door seal is fixed to a vehicle with clips, a C-channel or a double-side-tape. In all cases, it is a problem to remove the doorseal, e.g. for repair works at the vehicle and to refit the doorseal again.

A door windowpane gasket is known from the document DE 197 14 642 A1, for sealing a pane against a roof rail in a frameless automobile door. The door pane gasket consists of a retaining rail with a C-shaped channel into which an elastic gasket profile is inserted that is oriented towards the pane. The retaining rail features drilled holes along its longitudinal extension to connect it with the roof rail by means of screws. The screws also have the task of connecting two metal sheets of the roof rail with each other. Seen in cross section, the gasket profile exhibits, on the side facing away from the pane and towards the retaining rail, a dovetail-like configuration that is formed by two grooves that are located in the lower area of the essentially rectangular gasket profile. Accordingly, the grooves extend in a longitudinal direction and on opposite sides of the gasket profile. When installed, the dovetail-like configuration of the gasket profile will be held in place by protrusions, located in the C-shaped retaining rail, which also extend longitudinally and on opposite sides along the retaining rail. These retaining rails are of minor appearance, particularly when bending of the gasket is necessary around sharp curves.

Further, several embodiment forms of a fastening element for fastening a removable gasket profile in a opening in a automobile body, for example, that of a window, a door, a sunroof, or a rear hatch, are familiar from the document DE 198 08 044 A1. The fastening element of one embodiment is essentially T-shaped and is fastened in the body part with rivets or screws, or it is glued or welded into its place. Snap-lock elements are located on the fastening element, with the gasket profile being fastened by complementary snap-lock elements attached thereto. Fixing such fastening elements to the body part forms a labour intensive work.

Based on this state of the art, the present invention aims to develop a releasable connecting element that facilitates fastening and removing components in combination with gasket profiles.

This task is solved through a connecting element with the features of Claim 1 as well as through an arrangement for detachable attachment of a gasket profile with the features of Claim 7. Advantageous embodiments of the connecting element are given in the Sub-Claims 2 through 6 and 8 through 10.

The core of the present invention lies in that the functions of various connecting or fastening elements are combined into one single connecting element in order to simplify the installation and removal of the individual body parts and components such as, for example, metal sheets of automobiles doors and their gasket profiles. For this purpose, in addition to the engagement surfaces for the assembly tool, there is at least one further retaining element located on the head of the connecting element, preferably in the form of a recess, to which a component, preferably a gasket profile, can be clasped. The function of screwing body parts together with the connecting element, for example, two pieces of door sheet metal, is accomplished by the same component which retains the gasket profile.

The configuration of the recess as a groove, which concentrically surrounds the central longitudinal axis of the connecting element, which recess is in particular located in the marginal area of the head, has been found to be particularly advantageous since, in this manner, a wider support base exists for the clasping attachment of the component. This also enables components that can be clasped onto the head in only one orientation to be clasped on irrespective of how far in the head is screwed.

To provide a screw with a cylinder-shaped head and, in the outer surface of the head, the recess, as well as, centrally positioned in the head, engagement surfaces for the assembly tool, has been found to provide particular design advantages. The last requirements are met by, for example, an Allen-head type Torx screw.

A screw, according to the invention, is preferably suited to establish a reversible connection of a first inner sheet metal element with a second inner sheet metal element on the door of a motor vehicle, as well as for the subsequent clasped connection of a gasket profile to the door. For this, the gasket profile exhibits snap-on elements that, by clasping, can be connected with the groove-shaped recess in the head of the screw. By securing the gasket profile through clasping, waviness in the gasket profile that could compromise its sealing effect can be avoided. Advantageously, the inner sheet metal elements can be assembled without the gasket profile interfering, since the profile can now be assembled at a later point in time. The same is true for disassembly. The gasket profile can also take over the function of covering the transition between the two inner sheet metal elements.

According to the invention, the aforementioned components, as well as those claimed and described in the embodiment example, are not subject to any exceptional conditions with respect to their size, dimensions, materials and technical concepts, so that the selection criteria known to exist in each field of application can be freely applied without restriction within the scope of the claims.

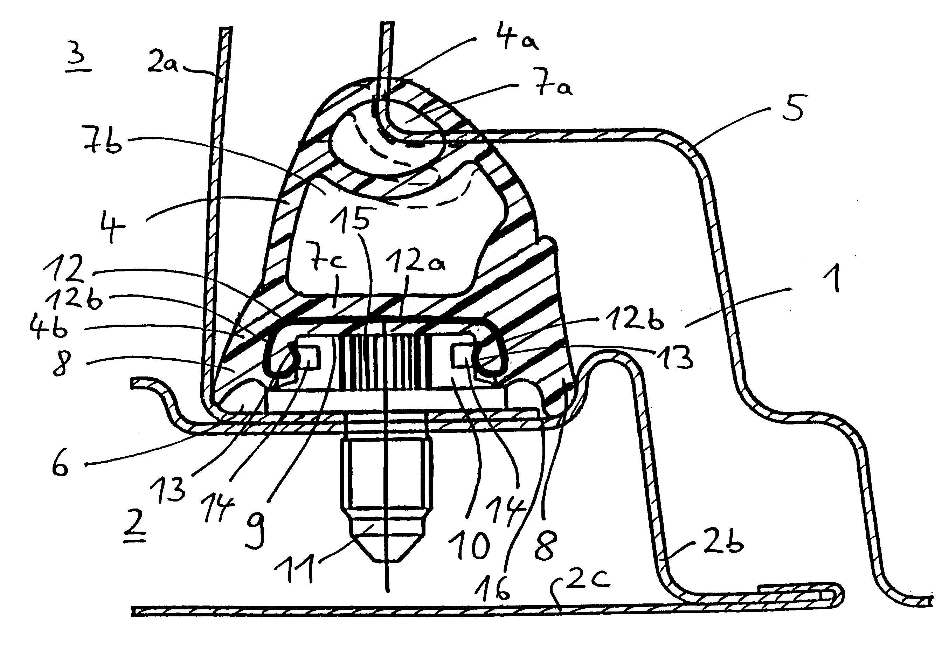

In the following, the invention is described in more detail based on an embodiment example shown in one single drawing figure.

The figure shows a view of a gap 1 between a closed door 2 and a door opening 3 of a motor vehicle. When door 2 is closed, gap 1 is sealed by a gasket profile 4 that abuts body sheet metal 5 of door opening 3 and that rests, in the opposite side, on recess 6 in door 2. An elongated elastic gasket profile 4 is shown in its relaxed state, although door 2 is closed. For a closed door, the gasket profile is also shown in its stressed condition (dashed lines).

Furthermore, gasket profile 4 exhibits - seen in cross section - a parabolashaped external contour, with the tip of gasket profile 4 resting, with tip 4a of the parabola, against body sheet metal 5 of door opening 3. Moreover, gasket profile 4 has been designed as a tubular profile with two chambers 7a, 7b. First chamber 7a is located in the area of tip 4a of gasket profile 4 and second chamber 7b is located adjacent to it and nearly completely filling the entire remaining cross-sectional space of gasket profile 4. In this manner the elasticity of gasket profile 4 can be adjusted to the shape of gap 1 in a simple way.

The continuation of the area with the two chamber 7a, 7b of gasket profile 4 is formed by a footing area 4b via which gasket profile 4 is supported in recess 6 of door 2 and via which it is attached to door 2. Footing 4b is formed by a wall 7c that forms the lower limit of second chamber 7b, as well as by adjacent extensions or lips 8 at each end that abut door 2 in the installed condition of gasket profile 4. Wall 7c and extensions 8 delimit a strip-shaped or elongated recess 9 at the bottom of footing 4b of gasket profile 4.

This recess 9 is designed so that gasket profile 4 can be clasped onto, and be removed from, head 10 of a connecting element that is configured as screw 11. In order to improve the clasping connection between head 10 and gasket profile 4, as well as to simultaneously increase the form stability of gasket profile 4 in a longitudinal direction and thereby between the individual attachment points, gasket profile 4 is reinforced by a longitudinal section 12, preferably a metal section. Instead of a metal section, a plastic molding can also be used. Longitudinal section 12 is U-shaped, as seen in cross section, and is designed in the fashion of a clasp. Bridge 12a of longitudinal section 12 - as seen in cross section - is straight for the most part, and the legs 12b on the two sides are curled inward by more than 270° to each form a projection-like snap-lock element 13 (that can be disengaged), with rounded engaging surfaces. Longitudinal section 12 molded into gasket profile 4 in such a manner that bridge 12a of longitudinal section 12 is located inside wall 7c and that legs 12b are located within the area of extensions 8, with two snap-locking elements 13 projecting from the gasket material into the direction of recess 9.

In order to guarantee a secure but also detachable hold of snap-lock elements 13 on head 10 of screw 11, two complementary snap-lock elements, formed by sections of recess 14 that has the shape of a circumferential groove running around the head of screw 11 are located opposite each other on head 10 of screw 11.

The center of the top surface of head 10 of screw 11, preferably a Torx screw, features engagement surfaces 15 for a screwing device shaped in the manner of an Allen head screw.

The figure also indicates that screw 11 also has the task, besides the function of holding gasket profile 4 in place, of fastening a first inner sheet metal element 2a of door 2 to a second inner sheet metal element 2b of door 2. In fulfilling these functions, transition 16 between the first and second inner sheet metal elements is covered by gasket profile 4.

Even though the present invention has been described in terms of using a Torx screw with central engagement surfaces (in the manner of an Allen screw) for the screwing tool, a realization of the invention is also possible with a screw with an exterior hexagonal head. In this event the surfaces of the exterior hexagonal screw head are either interrupted by the surrounding groove or the groove joins itself as a one-sided undercut on the side of the exterior hexagonal screw head surfaces that faces the shaft.

### List of reference symbols

- 1: Gap
- 2: Door
- 2a: First inner sheet metal element
- 2b: Second inner sheet metal element
- 2c: Outer sheet metal
- 3: Door opening
- 4: Gasket profile
- 4a: Tip of 4
- 4b: Footing of 4
- 5: Body sheet metal
- 6: Recess
- 7a: First chamber
- 7b: Second chamber
- 7c: Wall
- 8: Extension
- 9: Recess
- 10: Head
- 11: Screw
- 12: Longitudinal section
- 12a: Bridge
- 12b: Legs
- 13: Snap-lock element
- 14: Recess
- 15: Engagement surface
- 16: Transition

## Claims

1. Connecting element, in particular a screw, for securing body parts of a vehicle, with a head with engagement surfaces for an assembly tool, and with a shaft, **characterized in that** there is located on said head (10), an engagement surface (15) for an assembly tool and at least one holding element, such as a recess (14) to which a component, optimally a gasket profile (4), particularly of a door (2) of a motor vehicle, is clasp-attached in a detachable manner.

2. Connecting element according to Claim 1, **characterized in that** the holding element is configured as a concentric groove around the central longitudinal axis of connecting element (11).

3. Connecting element according to Claim 1 or 2, **characterized in that** the holding element is located in the region of the rim of head (10).

4. Connecting element according to anyone of Claims 1 to 3, **characterized in that** head (10) exhibits a cylinder-shaped outer surface, in which a recess (14) is located.

5. Connecting element according to anyone of Claims 1 to 4, **characterized in that** engagement surfaces (15) for the assembly tool are arranged concentrically in head (10).

6. Connecting element according to one of Claims 1 through 5, **characterized in that** the engagement surfaces 15 for the assembly tool are multi-edged inner surfaces (Allen screw type), preferably Torx surfaces.

7. Arrangement for detachable attachment of a gasket profile (4) to a door (2) of a motor vehicle, and for the detachable attachment of a first inner sheet metal element (2a) and a second inner sheet metal element (2b) by means of screws (11), according to anyone of Claims 1 to 6, **characterized in that** the first inner sheet metal element (2a) is attached to the second inner sheet metal element (2b) by means of several screws (11), and **in that** snap-lock elements (13) are located on a gasket profile (4) which, by clasping, engage the holding element of the head (10) of each of the screws (11).

8. The arrangement according to Claim 7, **characterized in that** transition (16) between first inner sheet metal element (2a) and second inner sheet metal element (2b) is covered by gasket profile (4).

9. The arrangement according to Claim 7 or 8, **characterized in that** snap-lock elements (13) protrude into a recess (9) extending along gasket profile (4).

10. The arrangement according to Claims 7 through 9, **characterized in that** snap-lock elements (13) are provided on the opposite ends of a clasp-shaped longitudinal section (12).
